# EUROPEAN PATENT APPLICATION

(11) **EP 1 801 909 A1**
(43) Date of publication of application: **27.06.2007**
(21) Application number: 05793667.6
(22) Date of filing: 12.10.2005
(51) Int. Cl.: H01M 14/00, H01L 31/04

(54) **DYE SENSITIZED METAL OXIDE SEMICONDUCTOR ELECTRODE AND METHOD FOR MANUFACTURING THE SAME, AND DYE SENSITIZED SOLAR CELL**

(30) Priority: 15.10.2004 JP 2004301707
(71) Applicant: Bridgestone Corporation, Tokyo 104-8340 (JP); SNT Co., Kawasaki-shi, Kanagawa, 2120054 (JP)
(72) Inventor: SHIRATORI, Seimei, c/o SNT Co.,, Kawasaki-shi, Kanagawa 2120054 (JP); DING, Bin, c/o SNT Co.,, Kawasaki-shi, Kanagawa 2120054 (JP); ONOZUKA, Katsuhiro, c/o SNT Co.,, Kawasaki-shi, Kanagawa 2120054 (JP); SUGI, Shinichiro, c/o Bridgestone Corporation, Kodaira-shi, Tokyo 1870031 (JP); OHNO, Shingo, c/o Bridgestone Corporation, Kodaira-shi, Tokyo 1870031 (JP); YOSHIKAWA, Masato, c/o Bridgestone Corporation, Kodaira-shi, Tokyo 1870031 (JP)
(74) Representative: Whalley, Kevin
(86) International application number: PCT/JP2005/018790
(87) International publication number: WO 2006/041092

(57) **Abstract**

Provided are a dye sensitized metal oxide semiconductor electrode having a metal oxide semiconductor film that can adsorb a sufficient amount of dye due to a high specific surface area and exhibits high electrical conductivity due to tight contact of metal oxide particles, and a dye sensitized solar cell that exhibits high power generation efficiency by using this dye sensitized metal oxide semiconductor electrode. The dye sensitized metal oxide semiconductor electrode is produced by forming a metal oxide semiconductor film on a transparent conductive film formed on a substrate. A stock solution containing a metal oxide precursor is jetted onto the transparent conductive film by electrospinning. A nanofiber layer containing a metal oxide precursor is deposited on the transparent conductive film, and this deposited layer is fired.

## Description

### Technical Field

The present invention relates to a dye sensitized metal oxide semiconductor electrode, a method for manufacturing the same, and a dye sensitized solar cell.

### Background Art

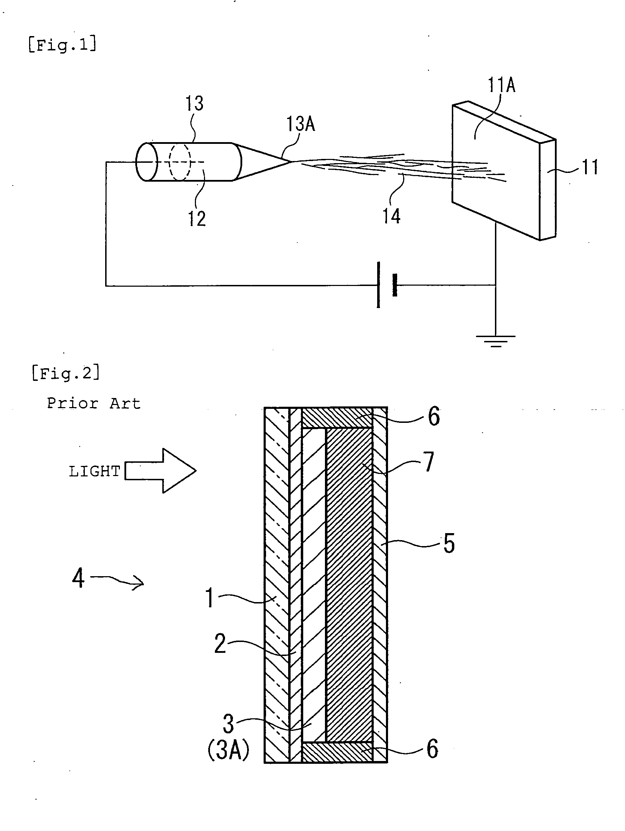

Solar cells including electrodes composed of metal oxide semiconductors that contain adsorbed sensitizing dyes are known. Fig. 2 a cross-sectional view showing a typical structure of such dye sensitized solar cells. As shown in Fig. 2, a transparent conductive film 2 of, for example, FTO (fluorine-doped tin oxide) or ITO (indium tin oxide) is provided on a substrate 1 such as a glass substrate, and a metal oxide semiconductor film 3 containing an adsorbed spectrally sensitizing dye (dye-adsorbed metal oxide semiconductor film 3A) is formed on the transparent conductive film 2 to form a dye sensitized metal oxide semiconductor electrode 4. A counter electrode 5 faces the metal oxide semiconductor film 3 with a gap, and electrolyte 7 is encapsulated between the dye sensitized semiconductor electrode 4 and the counter electrode 5 with sealants 6.

The dye-adsorbed metal oxide semiconductor film 3A is generally composed of a dye-absorbed titanium oxide thin film. The dye adsorbed on the titanium oxide thin film is excited by visible light, and electrons generated are transferred to titanium oxide particles to produce electric power. The counter electrode 5 consists of a glass or plastic substrate provided with a transparent conductive film of ITO or FTO thereon. As a catalyst to facilitate electron transfer between the transparent conductive film and the sensitizing dye, a platinum or carbon film with a thickness that does not decrease transmittance is formed on the transparent conductive film. Generally used electrolytes 7 are electrolyte solutions prepared by dissolving redox materials, such as combinations of metal iodides, e.g. LiI, NaI, KI, and CaI₂ with iodine and combinations of metal bromides, e.g. LiBr, NaBr, KBr, and CaBr₂ with bromine, preferably redox materials composed of combinations of metal iodides with iodine in solvents such as carbonate compounds, e.g. propylene carbonate, and nitrile compounds, e.g. acetonitrile.

Metal oxide semiconductor films composed of titanium oxide have been conventionally formed by firing titanium oxide precursor films deposited on substrates by sol-gel processes or titania films deposited on substrates by application of titania paste by doctor blading or screen printing, at high temperatures.

For production of dye sensitized solar cells excellent in power generation efficiency and stability, the control of structure of the metal oxide semiconductor film in the dye sensitized metal oxide semiconductor electrode is significantly important. More specifically, the metal oxide semiconductor film should have a porous structure of a high specific surface area that can adsorb a sufficient amount of dye. Furthermore, in order to achieve sufficiently high electrical conductivity, titanium oxide particles in the semiconductor film must be in tight contact with each other in such a porous structure having a high specific surface area.

In conventional sol-gel processes or application processes using titania paste, however, it is difficult to form a semiconductor film having a porous structure with compatibility of a sufficiently high specific surface area and tight contact of titanium oxide particles.

The titanium oxide film produced by a conventional process is present in the form of aggregates of titanium oxide particles. In a film having many spaces between these titanium oxide particles and a high specific surface area, titanium oxide particles insufficiently link together. An attempt to improve link between the titanium oxide particles inevitably leads to an increase in density of titanium oxide particles. In such a case, a porous film with a high specific surface area cannot be formed.

### Disclosure of Invention

An object of the present invention is to provide a dye sensitized metal oxide semiconductor electrode having a metal oxide semiconductor film that can adsorb a sufficient amount of dye due to a high specific surface area and that exhibits high electrical conductivity due to tight contact of metal oxide particles, and to provide a dye sensitized solar cell that exhibits high power generation efficiency by using this dye sensitized metal oxide semiconductor electrode.

A method for manufacturing dye sensitized metal oxide semiconductor electrode according to a first aspect of the present invention includes a step of forming a metal oxide semiconductor film on a conductive base layer formed on a substrate. A nanofiber layer is deposited on the conductive base layer by spraying a stock solution containing a metal oxide precursor onto the conductive base layer by electrospinning, and this deposited layer is fired.

A dye sensitized metal oxide semiconductor electrode according to a second aspect of the present invention is produced by the method for manufacturing the dye sensitized metal oxide semiconductor electrode according to the first aspect.

A dye sensitized metal oxide semiconductor electrode according to a third aspect of the present invention includes a substrate; a base layer formed on the substrate; and a metal oxide semiconductor film formed on the conductive base layer. This semiconductor film comprises metal oxide nanofibers formed by electrospinning.

A dye sensitized solar cell according to a fourth aspect of the present invention includes a dye-sensitized semiconductor electrode; a counter electrode facing the dye-sensitized semiconductor electrode; and an electrolyte disposed between the dye-sensitized semiconductor electrode and the counter electrode. This dye-sensitized semiconductor electrode corresponds to the dye sensitized metal oxide semiconductor electrode according to the second or third aspect.

### Brief Description of the Drawings

Fig. 1 is a schematic view illustrating an embodiment of a method for manufacturing a metal oxide semiconductor film according to the present invention.
Fig. 2 is a cross-sectional view illustrating a structure of a dye sensitized solar cell.

### Best Mode for Carrying Out the Invention

According to the present invention, there is provided a dye sensitized solar cell that exhibits high power generation efficiency by using a dye sensitized metal oxide semiconductor electrode having a metal oxide semiconductor film that can adsorb a sufficient amount of dye due to a high specific surface area and that exhibits high electrical conductivity due to tight contact of metal oxide particles.

A bulky nanofiber layer containing a metal oxide precursor can be deposited on a conductive base layer such as a transparent conductive film by spraying a stock solution containing a metal oxide precursor onto the conductive base layer such as a transparent conductive film on a substrate by electrospinning. Thus, metal oxide semiconductor film prepared by firing of the deposited layer is a nonwoven fabric layer composed of metal oxide nanofibers and a porous layer having a significantly high specific surface area. In addition, this metal oxide semiconductor film exhibits high electrical conductivity caused by mutual entanglement of metal oxide nanofibers.

Furthermore, according to the present invention, a metal oxide semiconductor film can be produced by minimized steps including preparation of a stock solution containing a metal oxide precursor, and deposition and firing of a nanofiber layer by electrospinning, resulting in an improvement in productivity due to the minimized steps.

A conventional method for manufacturing a metal oxide semiconductor electrode requires complicated steps, for example, crystallization and microparticulation of titanium oxide by hydrothermal synthesis, preparation of dispersion containing these microparticles, and application and firing of the dispersion on a substrate. In contract, according to the present invention, a process for forming the metal oxide semiconductor film can be simplified.

Embodiments of the dye sensitized metal oxide semiconductor electrode, the method for manufacturing this electrode, and a dye sensitized solar cell of the present invention will now be described in detail with reference to the attached drawings.

Fig. 1 is a schematic view illustrating an embodiment of a method for manufacturing a metal oxide semiconductor film (a method for depositing a nanofiber layer containing a metal oxide precursor by electrospinning) according to the present invention.

First, in the present invention, a conductive base layer such as a transparent conductive film is formed on a substrate.

The substrate generally used is a glass substrate made of, for example, silicate glass. The thickness of the substrate is in the range of generally 0.1 to 10 mm and preferably 0.3 to 5 mm (for example, about 1 mm). Preferably, the glass plate should be chemically or thermally reinforced.

As the conductive base layer such as a transparent conductive film, conductive metal oxide thin films of, for example, In₂O₃ and SnO₂, and conductive substrates of, for example, metals are used. Examples of preferred conductive metal oxides include In₂O₃:Sn(ITO), SnO₂:Sb, SnO₂:F(FTO), ZnO:Al, ZnO:F, and CdSnO₄. The transparent conductive film may be a laminate of two or more transparent conductive films or may be composed of a mixture of two or more materials.

The conductive base layer such as a transparent conductive film can be formed by any process, for example, by sputtering, laser evaporation, or CVD. In general, the conductive base layer such as a-transparent conductive film has a thickness of about 100 to about 1000 nm.

In the present invention, a stock solution containing a metal oxide precursor is sprayed by electrospinning onto the conductive base layer such as a transparent conductive film of a substrate provided with the conductive base layer such as a transparent conductive film (hereinafter referred to as "substrate with a transparent conductive film") to deposit a nanofiber layer containing a metal oxide precursor on the conductive base layer such as a transparent conductive film.

Electrospinning is known as a method of fibrillation utilizing electricity. As shown in Fig. 1, a DC voltage is applied between a substrate 11 (substrate with a transparent conductive film) and a container 13 provided with a capillary (needle) 13A that contains a the stock solution containing a metal oxide precursor 12 to discharge the stock solution containing a metal oxide precursor 12 toward the transparent conductive film 11A of the substrate 11 provided with the transparent conductive film. The stock solution containing a metal oxide precursor 12 is discharged in the form of droplets from the capillary 13A by its surface tension. Electric charges are concentrated onto the surfaces of droplets and act repulsively. If the repulsive force exceeds the surface tension, droplets split into jets. Evaporation of the solvent during this process enhances repulsive force of the charges, and the jets further splits into microjets 14. In the microjets 14, molecular chains of the polymer compound in the stock solution containing a metal oxide precursor are oriented. As a result, the metal oxide precursor in the stock solution containing a metal oxide precursor reaches the transparent conductive film 11A of the substrate 11 with the transparent conductive film in the form of thin fibers connected by the polymer chains, and agglutinates in this form. A nanofiber layer of the metal oxide precursor is thereby deposited on the transparent conductive film 11A.

In this electrospinning process, the applied voltage, the distance between the capillary and the substrate, the diameter of the capillary nozzle, and the composition of the stock solution containing a metal oxide precursor may be adjusted accordingly to form a substrate with a transparent conductive film made of nanofibers having a desirable average diameter and a desirable length.

In the present invention, the applied voltage in the electrospinning process is preferably in the range of about 20 to about 30 kV. An applied voltage less than this range results in insufficient fibrillation, whereas an applied voltage exceeding this range is dangerous for the apparatus and operators regardless of the formation of nanofibers.

The distance between the capillary tip and the substrate depends on the applied voltage, viscosity of the stock solution, and conductivity, and preferably ranges from about 5 to about 15 cm. A distance outside of this range fails to form satisfactory nanofibers. The diameter of the capillary nozzle generally ranges from about 300 to about 500 µm. A diameter of the capillary nozzle outside of this range fails to form satisfactory nanofibers.

Preferably, the stock solution containing a metal oxide precursor should be prepared by dissolving the polymer compound for forming the polymer molecular chains and the metal oxide precursor.

The polymer compound may be composed of one or more of polyvinyl acetate and polyvinyl alcohol, depending on the type of the solvent, and preferably the molecular weight of the polymer ranges from about 100000 to about 500000.

Any solvent that can dissolve metal oxide precursor described below and does not react therewith may be used. Nonlimiting examples of such a solvent include N,N-dimethylformamide (DMF), formamide, dioxane, alcohols such as methanol and ethanol, benzene, and tetrahydrofuran (THF). These may be used alone or in combination.

Examples of metal oxide precursor include metal alkoxides and metal salts. Examples of the metal alkoxides include ethoxide, isopropoxide, and butoxide. Preferably, the metal oxide semiconductor film formed in the present invention should be a titanium oxide film or a tin oxide film, and thus examples of the metal oxide precursor include titanium tetraisopropoxide, titanium tetra-n-propoxide, titanium tetra-n-butoxide, titanium tetraisobutoxide, titanium tetra-t-butoxide, and tin alkoxides corresponding to these compounds. These metal oxide precursors may be used alone or in combination.

The stock solution containing a metal oxide precursor may contain any organic acid such as acetic acid to suppress hydrolysis of the metal alkoxide.

The content of the polymer compound in the stock solution containing a metal oxide precursor depends on the type of the polymer compound used and preferably ranges from about 1 to about 30 weight percent and more preferably about 6 to about 10 weight percent. The concentration of the metal oxide precursor in the stock solution containing a metal oxide precursor ranges from about 5 to about 60 weight percent and preferably about 15 to about 40 weight percent. Preferably, the stock solution containing a metal oxide precursor should be prepared such that the polymer compound is about 25 to about 40 weight percent of the metal oxide precursor.

If an additive such as acetic acid is used, its concentration in the stock solution containing a metal oxide precursor preferably ranges from about 4 to 10 weight percent.

The nanofibers containing a metal oxide precursor formed on the substrate with a transparent conductive film using a stock solution containing a metal oxide precursor by electrospinning preferably has an average diameter of about 20 to about 500 nm and an average length of about 0.1 to about 10 µm in order to achieve a high specific surface area.

The deposited nanofiber layer containing a metal oxide precursor is then fired to burn the polymer compound and to convert the metal oxide precursor into metal oxide crystals, resulting in formation of a metal oxide film. A firing temperature that is too low leads to inefficiency of firing of the polymer compound, conversion of the metal oxide precursor into metal oxide, and crystallization, whereas a firing temperature that is too high leads to industrial disadvantages. Thus, it is preferred that firing be carried out at generally 400 to 1000°C and particularly 500 to 600°C for 1 to 2 hours.

The metal oxide semiconductor film should be preferably a substrate with a transparent conductive film composed of metal oxide nanofibers having an average diameter of about 100 to about 400 nm. It is preferred that the thickness of the film be about 300 to about 1000 nm and the specific surface area be about 10 to about 100 m²/g.

Examples of metal oxide constituting the metal oxide semiconductor film include known metal oxide semiconductors, e.g. titanium oxide, zinc oxide, tungsten oxide, antimony oxide, niobium oxide, tungsten oxide, and indium oxide. These metal oxides may be used alone or in combination. Among these, titanium oxide is preferred in view of stability and safety.

A dye is adsorbed onto the metal oxide semiconductor film to form a dye-adsorbed metal oxide semiconductor electrode. Organic dyes (spectrally sensitizing dyes) to be adsorbed on the semiconductor film should have absorption in visible and/or infrared light regions. Various metal complexes and organic dyes may be used alone or in combination. Spectrally sensitizing dyes having functional groups, such as a carboxyl group, a hydroxyalkyl group, a hydroxyl group, a sulfone group, and a carboxyalkyl group in their molecules are preferred because these dyes can be readily adsorbed onto semiconductors. More specifically, metal complexes, which are excellent in spectral sensitization and durability, are preferred. Examples of metal complexes include metal phthalocyanines, such as copper phthalocyanine and titanyl phthalocyanine; chlorophylls; hemin; and complexes of ruthenium, osmium, iron, and zinc disclosed in Japanese Unexamined Patent Application Publication No. 1-220380 and Japanese translation of PCT application 5-504023. Examples of organic dyes that can be used include metal-free phthalocyanines, cyanine dyes, merocyanine dyes, xanthene dyes, and triphenylmethane dyes. Examples of the cyanine dyes include NK1194 and NK3422 (made by Nihon Kanshiki Shikiso Kenkyusho Kabusiki Kaisha). Examples of the xanthene dyes include uranine, eosin, rose bengal, Rhodamine B, and dibromofluorescein. Examples of the triphenylmethane dyes include Malachite Green and Crystal Violet.

In order to adsorb the organic dye (spectrally sensitizing dye) onto the semiconductor film, the metal oxide semiconductor film and the substrate are generally immersed in an organic dye solution, which is prepared by dissolving an organic dye in an organic solvent, at normal or elevated temperatures. For the solution, any solvent that can dissolve the spectrally sensitizing dye may be used. Examples of such solvents include water, alcohols, toluene, and dimethylformamide.

The semiconductor electrode 4 having the dye-adsorbed semiconductor film is placed opposite a counter electrode 5, and an electrolyte 7 is encapsulated between these electrodes 4 and 5 with a sealant 6 to produce a dye sensitized solar cell of the present invention. The counter electrode 5 may be made of any conductive material and preferably a catalytic material that can significantly facilitate reduction of oxidized redox ions such as I₃⁻ ions in the electrolyte. Examples of such materials include platinum electrodes, conductive materials with platinum layers formed by plating or evaporation, rhodium metal, ruthenium metal, ruthenium oxide, carbon, cobalt, nickel, and chromium.

### EXAMPLES

The present invention will now be described in further detail by way of examples.

### EXAMPLE 1

A stock solution containing a metal oxide precursor having the following composition was prepared:

### [Composition of stock solution containing metal oxide precursor]

Polyvinyl acetate: 0.5 g
N,N-DMF: 4.5 g
Titanium tetraisopropoxide: 2.0 g
Acetic acid: 0.5 g

Using this stock solution containing a metal oxide precursor, a nanofiber layer was deposited on a FTO film of a glass substrate (thickness: 2 mm) having the TFO film by electrospinning shown in Fig. 1 under the following conditions and then the deposited layer was fired at 500°C for 1 hours.

### [Conditions of electrospinning]

Applied voltage: 20 kV
Distance between capillary and substrate: 14 cm

Scanning electron microscopic analysis showed that the formed titanium oxide semiconductor film was composed of a deposited layer of titanium oxide nanofibers having an average diameter of 300 nm, the thickness of the layer was about 1000 nm, and the specific surface area was 400000 cm² / g .

Lithium iodide (0.3 mol/L) and iodine (0.03 mol/L) were added to a mixed solvent of acetonitrile:3-methyl-2-oxazolidinone = 50:50 (weight ratio) to prepare a liquid electrolyte.

Into a solution that was prepared by dissolving ruthenium (II) cis-di(thiocyanato)-N,N'-bis (2,2'-bipyridyl-4,4'-dicarbolylate dihydrate as a spectrally sensitizing dye (3x10⁻⁴ mol/L) in ethanol, the substrate with the titanium oxide semiconductor film was immersed at room temperature for 18 hours to prepare a dye-sensitized titanium oxide semiconductor electrode. The density of the adsorbed spectrally sensitizing dye was 15 µg per specific surface area (cm²/g) of the titanium oxide film.

On the dye-sensitized titanium oxide semiconductor electrode, a tape functioning as an end plate was stuck and the liquid electrolyte was applied. On the surface of the electrolyte, a platinum-carrying transparent conductive glass as a counter electrode was stacked, and side faces were sealed with resin. Lead lines were attached to complete a dye sensitized solar cell.

The resulting dye sensitized solar cell (cell area: 1 cm²) was irradiated with light with an intensity of 100 mW from a solar simulator. The Eff conversion efficiency was 1%.

## Claims

1. A method for manufacturing a dye sensitized metal oxide semiconductor electrode comprising a step of forming a metal oxide semiconductor film a conductive base layer formed on a substrate, wherein the step of forming the metal oxide semiconductor film comprises depositing a nanofiber layer containing a metal oxide precursor on the conductive base layer by jetting a stock solution containing a metal oxide precursor onto the conductive base layer by electrospinning and firing the deposited layer.

2. The method for manufacturing the dye sensitized metal oxide semiconductor electrode according to claim 1, wherein the conductive base layer is a transparent conductive film.

3. The method for manufacturing the dye sensitized metal oxide semiconductor electrode according to claim 1, wherein the metal oxide is titanium oxide.

4. The method for manufacturing the dye sensitized metal oxide semiconductor electrode according to claim 1, wherein the stock solution containing the metal oxide precursor is a solution containing 5 to 60 weight percent metal oxide precursor and 1 to 30 weight percent polymer compound.

5. The method for manufacturing the dye sensitized metal oxide semiconductor electrode according to claim 1, wherein the metal oxide precursor is a metal alkoxide.

6. A dye sensitized metal oxide semiconductor electrode produced by the method for manufacturing the dye sensitized metal oxide semiconductor electrode according to claim 1.

7. A dye sensitized metal oxide semiconductor electrode comprising a substrate; a conductive base layer formed on the substrate; a metal oxide semiconductor film formed on the conductive base layer, wherein the semiconductor film comprises a metal oxide nanofiber formed by electrospinning.

8. The dye sensitized metal oxide semiconductor electrode according to claim 7, the metal oxide nanofiber is a titanium oxide nanofiber.

9. A dye sensitized solar cell comprising a dye-sensitized semiconductor electrode; a counter electrode facing the dye-sensitized semiconductor electrode; and an electrolyte disposed between the dye-sensitized semiconductor electrode and the counter electrode, wherein the dye-sensitized semiconductor electrode is the dye sensitized metal oxide semiconductor electrode according to claim 5.

10. A dye sensitized solar cell comprising a dye-sensitized semiconductor electrode; a counter electrode facing the dye-sensitized semiconductor electrode; and an electrolyte disposed between the dye-sensitized semiconductor electrode and the counter electrode, wherein the dye-sensitized semiconductor electrode is the dye sensitized metal oxide semiconductor electrode according to claim 6.
